# EUROPÄISCHE PATENTSCHRIFT

(11) **EP 0 745 203 B1**
(45) Veröffentlichungstag und Bekanntmachung des Hinweises auf die Patenterteilung: **29.03.2000**
(21) Anmeldenummer: 95942167.8
(22) Anmeldetag: 15.12.1995
(51) Int. Cl.: F16L 41/06, F16L 47/00, F16L 41/16

(54) **VERFAHREN UND VORGEFERTIGTE TEILE ZUR HERSTELLUNG VON ROHRABZWEIGUNGEN**
METHOD AND PREFABRICATED PARTS FOR PRODUCING PIPE BRANCH PIECES
PROCEDE ET PIECES PREFABRIQUEES POUR LA REALISATION DE DERIVATIONS SUR DES TUYAUTERIES

(30) Priorität: 16.12.1994 DE 4445005
(43) Veröffentlichungstag der Anmeldung: 04.12.1996
(73) Patentinhaber: Reich KG, Regel- und Sicherheitstechnik, 35713 Eschenburg (DE)
(72) Erfinder: Bender, Helmuth, 35713 Eschenburg-Wissenbach (DE)
(74) Vertreter: Hofstetter, Alfons J., Dr.rer.nat.
(86) Internationale Anmeldenummer: EP9504973
(87) Internationale Veröffentlichungsnummer: WO9618843

(56) Entgegenhaltungen:
- EP-A- 0 093 328
- US-A- 2 512 009
- US-A- 4 100 929
- US-A- 5 152 310

## Beschreibung

Die vorliegende Erfindung betrifft ein Verfahren zum Herstellen von einer oder mehreren ventilbetätigten Abzweigungen an einem mediumsführenden Rohr. Ferner wird mit der Erfindung vorgeschlagen, wie die hierfür benötigten Teile auszugestalten sind. In vielen Bereichen der Technik stellt sich die Aufgabe, aus einem mediumsführenden Hauptrohr Abzweigungen herzustellen, die jede für sich aus dem Hauptrohr eine bestimmte Menge des Mediums abzweigt, wobei ein an der Abzweigung angeordnetes Ventil die abzuzweigende Menge reguliert.

Es kann sich hierbei beispielsweise um sogenannte Heizkreisverteiler in Zentralheizungen handeln, es kann sich aber auch bei dem zu verteilenden Medium um Öl oder Schmiermittel handeln, man kann an Abzweigungen denken, die in der chemischen Verfahrenstechnik erforderlich werden. Der Anwendungsbereich ist beliebig. Es kann sich auch um gasförmige Medien handeln.

Ebenso wie die aus einem Hauptrohr abzuzweigenden Medien verschiedenster Natur sein können, umfaßt die vorliegende Erfindung auch alle Arten von Materialien, aus denen die Rohre und die Abzweigungen hergestellt sind. Es kann sich um Metallrohre handeln, um Eisenrohre oder Nichteisenmetallrohre, es kann sich um verstärkte oder nichtverstärkte Kunststoffrohre handeln. Man kann sogar an die Anwendung von Glasrohren denken.

Ferner ist es für die Anwendung der vorliegenden Erfindung gleichgültig, ob die Abzweigungen in einem bestehenden System nachträglich angebracht werden oder ob sie bei der Fertigstellung einer Anlage im Montagezustand hergestellt werden oder ob es sich um vorgefertigte Abzweigungen handelt.

Für das Anbohren von hierbei in Betrieb verbleibenden Rohren sind verschiedene Vorrichtungen bekannt. So wird in der DE 42 39 573 A1 eine Anbohrarmatur für unter Druck stehende Rohrleitungen beschrieben. Diese übernimmt zunächst die Funktion einer auf die Rohrleitung aufspannbaren Bohrlehre für ein Bohrwerkzeug. Dieses Bohrwerkzeug ist mit einem Ventilteller verbunden, der die Ventilfunktion übernimmt.

Im DE-GM 74 10 858 ist eine Anbohr-Rohrschelle für Druckluft und Wasser beschrieben. Auch hierbei ist der Bohrer mit einem Dichtelement versehen. Dieser Stand der Technik zielt darauf ab, die in Betrieb befindliche Rohrleitung mit einer Abzweigung versehen zu können, wobei die Bohrhilfe am Rohr als Ventilorgan verbleibt.

Demgegenüber besteht die Aufgabe für die vorliegende Erfindung darin, von einem nicht in Betrieb befindlichen Rohr an beliebiger Stelle und in beliebiger Anzahl ventilbetätigte Abzweigungen anbringen zu können.

Der grundsätzliche Lösungsgedanke der vorliegenden Erfindung besteht darin, daß für jede ventilbetätigte Abzweigung quer zur Achse des Hauptrohres zunächst zwei sich -gegenüberliegende Öffnungen angebracht werden. Beispielsweise kann quer zur Hauptachse eines Metallrohres mit einem Bohrer eine Bohrung durch beide sich gegenüberliegenden Mantelflächen des Rohres gebohrt werden. Über diese dadurch festgelegte Abzweigungsstelle wird gemäß der Erfindung eine vorbereitete, zweiteilige Einheit aus Oberteil und Unterteil gelegt. Das Unterteil der vorbereiteten Einheit weist hierbei eine zur unteren vorgebohrten Öffnung passende Durchlaßpassage für das abzuzweigende Medium auf. Das Oberteil der vorbereiteten Einheit hat dagegen einen in die gegenüberliegende Öffnung passenden Ventileinsatz. Beide Teile werden fest und dichtend auf das Rohr von außen aufgeklemmt. Vorteilhafterweise kann die vorbereitete Einheit hierfür gelenkig miteinander verbunden sein, so daß eine vorbereitete Einheit wie eine offene Zange auf die beiden vorbereiteten Öffnungen aufgesetzt und dann an den freien Enden der Zange durch Verschrauben oder ähnliches auf das Rohr aufgeklemmt wird.

Erfindungsgemäß kann statt des Gelenks auch auf beiden Seiten eine Verschraubung die Klemmung auf dem Rohr herbeiführen.

Weitere Einzelheiten, Merkmale, Vorteile und Anwendungsmöglichkeiten der vorliegenden Erfindung ergeben sich aus der vorliegenden Beschreibung von zwei Ausführungsbeispielen der Erfindung in der Zeichnung.

Es zeigen:
- Fig. 1: in schematischer, perspektivischer Darstellung die Vorbereitung eines beliebigen Rohres für die Abzweigung über eine aufzusetzende Einheit mit Ventil,
- Fig. 2: eine schematische Seitenansicht auf ein Rohr mit zwei nebeneinandergeordneten Ventilstutzen mit Abzweigungen,
- Fig. 3: einen Querschnitt durch einen Rohrabzweig in einer ersten Ausführungsform im festgeklemmten Zustand,
- Fig. 4: einen Schnitt durch eine aufgeklappte Abzweigung mit Ventil vor dem Aufklammern auf ein Rohr gemäß der Ausführungsform von Fig. 3,
- Fig. 5: einen Schnitt ähnlich Fig. 3 in einer abgewandelten Ausführungsform und
- Fig. 6: einen Querschnitt durch einen Rohrabzweig gemäß einer weiteren Ausführungsform im festgeklemmten Zustand.

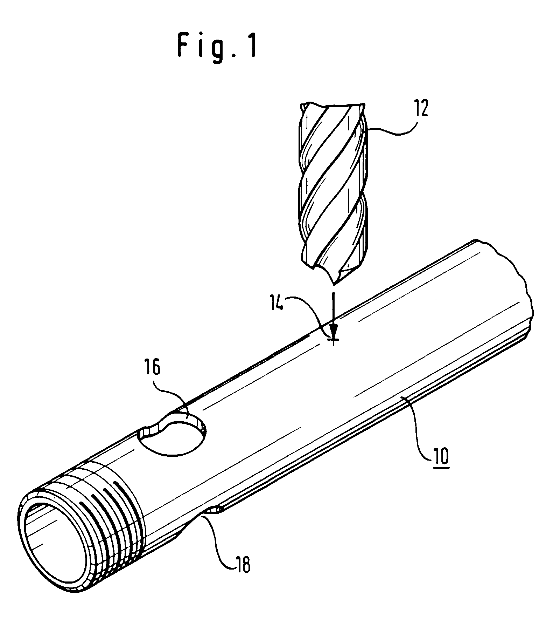

Ein mediumsführendes Rohr 10 wird gemäß Fig. 1 nach dem erfindungsgemäßen Verfahren für das Anbringen von ventilbetätigten Abzweigungen oder ventilbetätigten Rückführungen des Mediums in das Rohr auf einfache Weise vorbereitet. Das Rohr kann aus einem beliebigen Werkstoff wie Eisen, Nichteisen, Metall, Metall-Legierungen, Kunststoff oder Glas bestehen. Zur Anwendung gemäß der vorliegenden Erfindung kann es sich im Montagezustand, im Vormontagezustand oder im kurzzeitig stillgelegten Betrieb befinden. Das ab- oder zurückzweigende Medium kann flüssig oder gasförmig sein. Es kann sich um Öl, Kühlmittel, Trennmittel, Schmiermittel, nichtaggressive Chemikalien oder um heißes oder kaltes Wasser handeln. Ein Anwendungsgebiet ist die Darstellung eines Heizkreisverteilers in einem zentralen Heizungssystem. Jede andere Anwendung im Anlagenbau, im Versuchsanlagenbau oder zum nachträglichen Einbau in derartige Anlagen sind denkbar.

Im Gegensatz zur üblichen Technik braucht das Rohr 10 an der Abzweigstelle nicht unterbrochen und mit einem Gewinde oder Flansch o.ä. versehen zu werden. Vielmehr wird - wie in Fig. 1 beispielhaft angedeutet - quer zur Achse des Rohres 10 ein Bohrer 12 an der für die Abzweigung vorgesehenen Stelle 14 aufgesetzt, und senkrecht zur Rohrachse werden in einem Arbeitsgang zwei Öffnungen, eine obere Öffnung 16 und eine untere Öffnung 18, gebohrt. Damit ist das Rohr 10 für eine ventilbetätigte Abzweigung an der Bohrstelle 14 vorbereitet.

Das Ventil mit Abzweigstutzen ist vorteilhafterweise eine fertig vormontierte Einheit 20, die nach dem Herstellen der beiden Öffnungen griffbereit ist und in einfacher Weise wie eine Klammer über die Öffnungen 16 und 18 auf das Rohr 10 aufgesetzt und festgeklemmt wird.

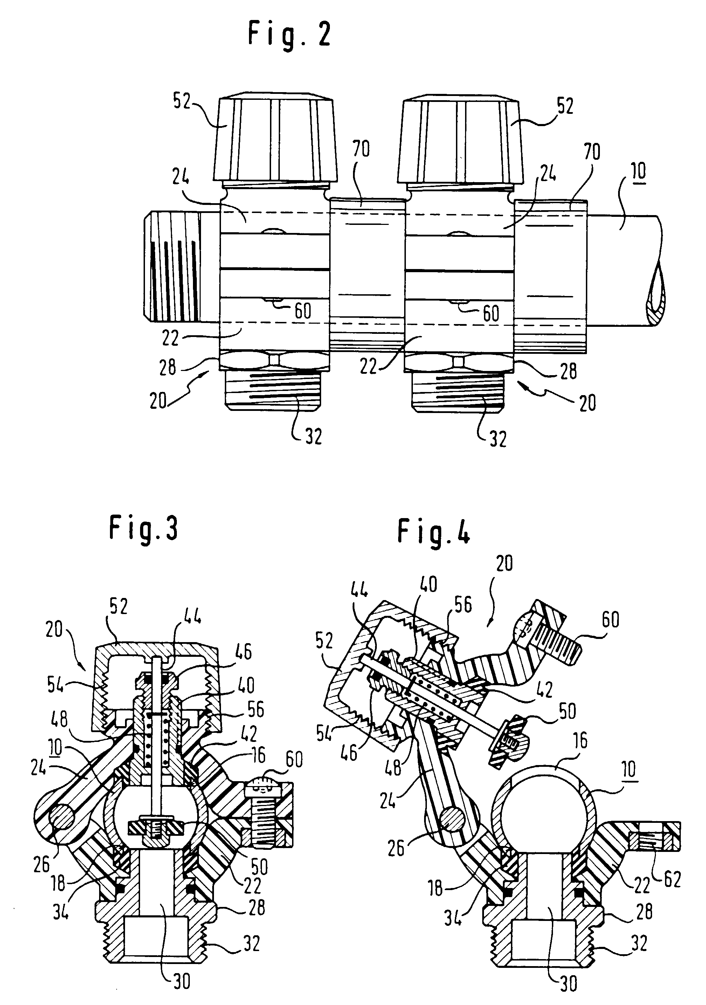

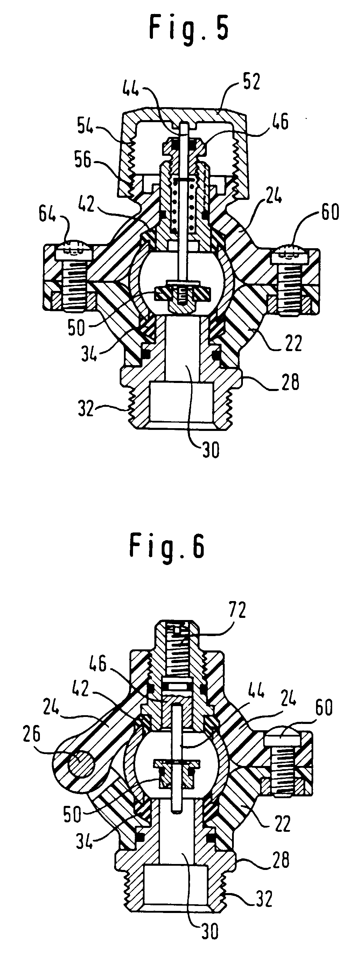

Die Einheit 20 besteht gemäß Fig. 3 und 4 im wesentlichen aus einem Unterteil 22 und einem Oberteil 24. Beide Teile 22 und 24 sind durch ein Gelenk 26 miteinander verbunden, und können aus Kunststoff, Metall oder Metallegierungen gefertigt sein.

Im Unterteil 22 befindet sich fest ein Rohrstück 28 mit einem Innenkanal oder einer Durchlaßpassage 30, welches die Abzweigung darstellt. Die Abzweigung erfolgt über eine mit einer Überwurfmutter auf ein Gewinde 32 aufschraubbare Leitung. Den oberen Öffnungsrand der Passage 30 umgibt ein formpassend abgestufter Dichtungsring 34.

Im oberen Kunststoffteil 24 sind die Teile des Absperrorgans zum Absperren der oberen Öffnung der Passage 30 oder des Kanals 30 fertig vormontiert angeordnet. Dieses Absperrorgan besitzt einen fest mit dem Kunststoffoberteil 24 verbundenen Ventilkörper 40. Der untere Teil des Ventilkörpers 40 und der angrenzende Teil des Kunststoffoberteils 24 sind mit einem formpassend abgestuften Dichtring 42 umgeben. Im Ventilkörper 40 ist ein Ventilschaft 44 geführt, der oben durch eine Büchse 46 abgedichtet ist. Ferner befindet sich im Ventilkörper 40 eine den Schaft 44 abfedernde Feder 48. Unten am Schaft 44 sitzt ein Ventilteller 50. Oben ist der Schaft 44 mit einem Drehgriff 52 verbunden, dessen Innengewinde 54 in einem am oberen Kragen des Kunststoffoberteils 24 angebrachtes Außengewinde 56 greift. Durch Drehen des Handgriffs 52 wird der Ventilteller 50 gehoben oder gesenkt.

Dieser herkömmliche Aufbau eines Ventils kann selbstverständlich in beliebiger Weise je nach Anwendungszweck abgewandelt werden. Wesentlich gemäß der vorliegenden Erfindung ist lediglich, daß die Anordnung in einem gelenkig oder zangenartig verbundenen Unterteil 22 und Oberteil 24 derartig benutzt wird, daß sich zunächst das Unterteil mit dem Dichtring 34 in die Öffnung 18 einsetzen läßt. Dann wird das Oberteil 24 um das Gelenk 26 geschwenkt, wobei der untere Ventilschaft 44 und der Ventilteller 50 durch die Öffnung 16 in das Rohr 10 eingeführt wird. Schließlich wird an der dem Gelenk 26 gegenüberliegenden Seite das Ober- und Unterteil 24 und 22 durch Eindrehen einer Schraube 60 in ein Gewinde 62 als Einheit 20 fest geschlossen und dicht auf das Rohr 10 aufgeklemmt. In diesem Endzustand fluchtet dann der Ventilschaft 44 und der Ventilteller 50 axial mit der Durchgangspassage 30, und es ist eine ventilbetätigte Abzweigung vom Rohr 10 in die Passage 30 in einfacher Weise geschaffen. Durch Drehen des Griffes 52 kann das Abzweigventil mehr oder weniger geöffnet oder vollständig geschlossen werden.

Der große Vorteil besteht hierbei darin, daß mit einem einteiligen, vormontierten Teil an beliebiger Stelle eines Rohres eine ventilbetätigte Abzweigung hergestellt werden kann.

Es ist jedoch auch eine zweiteilige Einheit gemäß Fig. 5 einsetzbar. In dieser Figur bezeichnen gleiche Bezugszeichen gleiche Teile. Der Unterschied gegenüber den Figuren 3 und 4 besteht darin, daß anstelle des Klappgelenks 26 das Unterteil 22 und das Oberteil 24 mit einer zweiten Schraube 64 verbunden werden.

Ein weiterer Vorteil ergibt sich dadurch, daß die aus den Teilen 22 und 24 gebildete Klammer das Rohr 10 an der Abzweigstelle isolierend umgreift. Sollten auch benachbarte Rohrteile des Rohres 10 ebenfalls eine Isolierung 70 (Fig. 2) erfordern, kann durch Klemmen der Teile 22 und 24 bewirkt werden, daß die zwischenliegenden Isolierungen 70 ebenfalls fest an das Rohr 10 angelegt werden.

Fig. 6 zeigt eine, insbesondere für Abzweigungen an Vorläufen vorteilhafte Ausführungsform. In dieser Figur bezeichnen gleiche Bezugszeichen gleiche Teile. Der Unterschied gegenüber den Fign. 3 und 4 besteht darin, daß hier der Schaft 44, auf dem der Ventilteller 50 sitzt, fest in der Büchse 46 eingepaßt ist, wobei die Kombination aus Büchse 46, Schaft 44 und Ventilteller 50 mittels einer Schraube 72 entlang der Achse der Passage oder des Kanals 30 bewegt werden kann. Vorteilhafterweise kann die Schraube 72 mit einem externen Griff (nicht gezeigt) verbunden werden. Auch in dieser Ausführungsform kann anstelle des Klappgelenks 26 das Unterteil 22 und das Oberteil 24 mit einer zweiten Schraube verbunden werden. Der Vorteil der in Fig. 6 gezeigten Ausführungsform besteht unter anderem darin, daß bei Druckbeaufschlagung auf der vom Kanal 30 abgewandten Seite, z.B. dadurch, daß im mediumsführenden Rohr 10 ein höherer Druck herrscht als in der am Gewinde 32 aufgeschraubten Leitung, keine unerwünschte Schließung des Ventils herbeigeführt werden kann.

## Patentansprüche

1. Verfahren zum Herstellen von einer oder mehreren ventilbetätigten Abzweigungen an einem mediumsführenden Rohr, wobei,
**an beliebiger Stelle** für jede ventilbetätigte Abzweigung quer zur Rohrachse des Rohres (10) **in einem Arbeitsgang** zwei sich gegenüberliegende Öffnungen (16, 18) angebracht werden, um die eine zweiteilige Einheit (20) aus Unterteil (22) und Oberteil (24) gelegt wird, wobei das Unterteil eine zur unteren Öffnung (18) dichtend passende Durchgangspassage (30) für das abzuzweigende Medium und das Oberteil (24) einen in die obere Öffnung (16) passenden Ventileinsatz aufweist und beide Teile (22, 24) fest auf das Rohr (10) aufgeklemmt werden.

2. Zweiteilige Einheit zur Durchführung des Verfahrens gemäß Anspruch 1, wobei das Unterteil (22) und das Oberteil (24) durch ein in der Ebene der Achse des Rohres (10) befindliches Klappgelenk (26) miteinander verbunden sind, während die dem Klappgelenk (26) gegenüberliegende Seite in derselben Ebene eine Verschraubung (60, 62) aufweist.

3. Zweiteilige Einheit nach Anspruch 2, dadurch gekennzeichnet, daß das Klappgelenk (26) durch eine Verschraubung (64) ersetzt ist.

4. Einheit gemäß Ansprüchen 2 oder 3, dadurch gekennzeichnet, daß im Unterteil (22) fluchtend zur unteren Öffnung (18) im Rohr (10) ein Anschlußstutzen (28) fest eingefügt ist, dessen oberer Rand mit einem umgebenden Dichtkragen (34) dichtend und passend zur unteren Öffnung (18) im Rohr (10) einen Ventilsitz im Rohr (10) bildet, während der untere Teil des Anschlußstutzens (28) radial über das Unterteil (22) hinausragt und ein Anschlußgewinde (32) für eine Abzweigleitung aufweist.

5. Einheit gemäß Ansprüchen 2 oder 3 und 4, dadurch gekennzeichnet, daß im Oberteil (24) ein Ventilkörper (40) fest eingefügt ist, dessen unterer Rand mit einem umgebenden Dichtkragen (42) im geschlossenen Zustand der Einheit (20) dichtend in der oberen Öffnung (16) im Rohr (10) anliegt, wobei ein im Ventilkörper geführter Schaft (44) mit Ventilteller (50) von außerhalb des Oberteils (24) betätigbar ist und mit der Achse des Anschlußstutzens (28) im Unterteil (22) fluchtet.

6. Einheit nach Ansprüchen 2 bis 5, dadurch gekennzeichnet, daß Unter- und Oberteil (22, 24) aus Kunststoff bestehen.

7. Einheit nach Ansprüchen 2 bis 6, dadurch gekennzeichnet, daß Unter- und Oberteil (22, 24) aus Metall oder einer Metallegierung besteht.

8. Einheit nach Ansprüchen 2 bis 7, dadurch gekennzeichnet, daß den Einheiten (20) benachbarte Isolierummantelungen (70) von den Einheiten (20) mitgeklemmt sind.

## Claims

1. A method for producing one or plural valve-actuated branch pieces of a medium-containing pipe wherein two opposing openings (16, 18) are provided in one single operation at a random position for each valve-actuated branch piece transverse to the pipe axis of said pipe (10), which openings are then surrounded by a two-piece unit (20) consisting of a lower part (22) and an upper part (24), with said lower part exhibiting a through passage (30) for the medium to be branched off which tightly fits on said lower opening (18), and said upper part (24) exhibiting a valve insert fitting into said upper opening (16), both said parts (22, 24) being clamped firmly onto said pipe (10).

2. A two-piece unit for performing the process as claimed in claim 1 wherein said lower part (22) and said upper part (24) are interconnected by means of a valve hinge (26) in the plane of the axis of said pipe (10), while the side opposite said valve hinge (26) includes a screwed connection (60, 62) in the same plane.

3. The two-piece unit as claimed in claim 2 wherein said valve hinge (26) has been substituted for a screwed connection (64).

4. The unit as claimed in claims 2 or 3 wherein a connecting branch (28) is tightly inserted in the lower part (22), in alignment with the lower opening (18) in the pipe (10), and the upper edge of said connecting branch (28), with a surrounding sealing collar (34), forms a valve seat in said pipe (10) which has a sealing function and fits the lower opening (18) in said pipe (10), while the lower part of the connecting branch (28) projects radially beyond said lower part (22) and includes a connecting thread (32) for a branch conduit.

5. The unit as claimed in claims 2 or 3 and 4 wherein a valve body (40) is firmly inserted in said upper part (24), whose lower edge, with a sealing collar (42) surrounding it, tightly sits in said upper opening (16) in said pipe (10) when unit (20) is in its closed state, with a shank (44) with valve disk (50) guided in said valve body being actuable from outside said upper part (24) and being in alignment with the axis of said connecting branch (28) in said lower part (22).

6. The unit as claimed in claims 2 to 5 wherein said lower and upper parts (22, 24) are made of plastic.

7. The unit as claimed in claims 2 to 6 wherein said lower and upper parts (22, 24) are made of metal or a metal alloy.

8. The unit as claimed in claims 2 to 7 wherein insulating sleeves (70) adjacent to said units (20) are also clamped in position by said units (20).

## Revendications

1. Procédé de réalisation d'une ou de plusieurs dérivations actionnées par soupape sur un tuyau conduisant un fluide, deux ouvertures (16, 18) opposées l'une à l'autre étant mises en place en une seule opération, transversalement à l'axe du tuyau (10) à un endroit facultatif pour chaque dérivation actionnée par soupape, autour desdites ouvertures est appliquée une unité à deux parties consistant en une partie inférieure (22) et en une partie supérieure (24), la partie inférieure présentant un passage (30) pour le fluide à dériver, ledit passage étant adapté à étancher l'ouverture inférieure (18), et une insertion de soupape adaptée à entrer dans l'ouverture supérieure (16), et les deux parties (22, 24) étant solidairement fixées sur le tuyau (10).

2. Unité à deux parties pour la réalisation du procédé selon la revendication 1, la partie inférieure (22) et la partie supérieure (24) étant reliées entre elles au moyen d'une articulation basculante (26) située au niveau de l'axe du tuyau (10), le côté opposé à l'articulation basculante (26) présentant au même niveau un vissage (60, 62).

3. Unité à deux parties selon la revendication 2, caractérisée en ce que l'articulation basculante (26) est remplacée par un vissage (64).

4. Unité selon les revendications 2 ou 3, caractérisée en ce qu'un raccord (28) est solidairement inséré dans la partie inférieure (22) en alignement à l'ouverture inférieure (18) du tuyau (10), le bord supérieur dudit raccord formant de manière étanche et adaptée à l'ouverture inférieure (18) du tuyau (10) un siège de soupape dans le tuyau (10) au moyen d'un collet d'étanchéité (34) l'entourant, tandis que la partie inférieure du raccord (28) fait radialement saillie de la partie inférieure (22) et présente un filet de raccordement (32) pour une conduite de dérivation.

5. Unité selon les revendications 2 ou 3 et 4, caractérisée en ce qu'un corps de soupape (40) est solidairement inséré dans la partie supérieure (24), le bord inférieur dudit corps de soupape au moyen d'un collet d'étanchéité (42) l'entourant étant en appui dans l'ouverture supérieure (16) du tuyau (10), la rendant étanche lorsque l'unité (20) est fermée, une tige (44) à tête de soupape (50) guidée à l'intérieur du corps de soupape pouvant être actionnée du dehors de la partie supérieure (24), et étant en alignement avec l'axe du raccord (28) dans la partie inférieure (22).

6. Unité selon les revendications 2 à 5, caractérisée en ce que la partie inférieure (22) et la partie supérieure (24) sont en matière synthétique.

7. Unité selon les revendications 2 à 6, caractérisée en ce que la partie inférieure (22) et la partie supérieure (24) sont en métal ou en alliage de métaux.

8. Unité selon les revendications 2 à 7, caractérisée en ce que des revêtements isolants adjacents aux unités (20) sont également fixés au moyen des unités (20).
